# EUROPEAN PATENT APPLICATION

(11) **EP 2 316 534 A1**
(43) Date of publication of application: **04.05.2011**
(21) Application number: 10186610.1
(22) Date of filing: 05.10.2010
(51) Int. Cl.: A62B 35/04, F16F 7/12

(54) **A shock absorber for a safety-line apparatus**

(30) Priority: 27.10.2009 IT RE20090105
(71) Applicant: C.S.C. S.r.l., 42015 Correggio (Reggio Emilia) (IT)
(72) Inventor: Barletta, Edoardo, 42015, Correggio (Reggio Emilia) (IT)
(74) Representative: Colò, Chiara

(57) **Abstract**

A shock absorber for a safety line apparatus, characterised in that it comprises two rods (2) slidably associated to one another, the rods (2) each exhibiting a first end (2a) and a second end (2b), the first ends (2a) being connectable to a cable of a safety line apparatus, the rods (2) further exhibiting respective prevalent longitudinal development axes (B) which are substantially parallel to one another, the first ends (2a) moving in reciprocal distancing/nearing when the second ends (2b) move respectively in reciprocal nearing/distancing; a dissipation organ (10) arranged between the second ends (2b) of the rods (2) and activatable by nearing the second ends (2b) in order to brake a distancing sliding action of the first ends (2a) of the rods (2), the dissipation organ (10) being plastically deformable to pass from a first configuration in which the dissipation organ (20) exhibits a maximum length to a second configuration in which the dissipation organ (10) exhibits a minimum length.

## Description

The present invention relates to a shock absorber for a safety-line apparatus.

By safety-line apparatus (life-lines), a system is intended for securing an operator to an anchoring point during performance of work on high surfaces, such as for example maintenance activities on a building's roof, the fastening of aerials, cleaning of chimneys and the like.

In more detail, a safety line apparatus comprises a cable stretched between two anchoring-points; in particular, each head of the cable is connected to a respective anchoring point. A rope is connected to the cable which can slide along the cable; the rope is further connected to a harness worn by the operator. This leaves the operator free to move safely on the whole raised surface and, should he fall, the apparatus prevents him from impacting onto an underlying surface.

The safety apparatus further comprises a tensioner for keeping the cable stretched by applying a predetermined tension thereon. Specific standards relating to operator safety prescribe a correct value for the tension to be applied to the cable; the tensioner thus enables the tension to be varied, by nearing or distancing two threaded attachments connected respectively to the cable to one of the two anchoring points.

In order to enable the operator to perform his activity in conditions of total safety, the safety line apparatus comprises a shock absorber, connected to an end of the cable and to one of the two anchoring points. By shock absorber is meant a device which can absorb or dissipate the operator's kinetic energy in a case in which he falls from the raised surface. The market offers a variety of shock absorbers, which are able to deform plastically such as to brake the possible fall of the operator.

In the field of safety-line protection apparatus, a known-type tension absorber comprises a sprocket and a metal rope wound on the sprocket. In particular, in a first configuration, the rope keeps its shape on the sprocket. The wire is connected to an anchoring point at a first end thereof; the wire is further connected to the cable at a second end. The rope is unwindable from the sprocket such as to pass into a second configuration in which the wire is tensioned. The application of a traction force of sufficient entity on the wire, following a fall on the part of the operator, unwinds the rope and brings it into the second configuration. During the unwinding of the rope, it deforms plastically, such as to absorb the kinetic energy of the operator and brake his fall.

The known shock absorber exhibits an important drawback The wire of the absorber is extended to cause dissipation of the energy. In this way known shock absorbers work prevalently by traction, and this implicates a risk of breakage of the absorber itself, with grave consequences for the operator. In this context, the technical task underlying the present invention is to provide a shock absorber for a safety-line apparatus which obviates the drawbacks in the above-cited prior art.

A particular aim of the present invention is to make available a shock absorber for safety-line apparatus which can guarantee structural integrity even following activation.

The technical task and the set aim are substantially attained by a shock absorber for safety-line apparatus, comprising the technical characteristics set out in one or more of the accompanying claims.

Further characteristics and advantages of the present invention will more clearly emerge from the non-limiting description that follows of a preferred but not exclusive embodiment of a shock absorber for safety line apparatus, as illustrated in the accompanying figures of the drawings, in which:

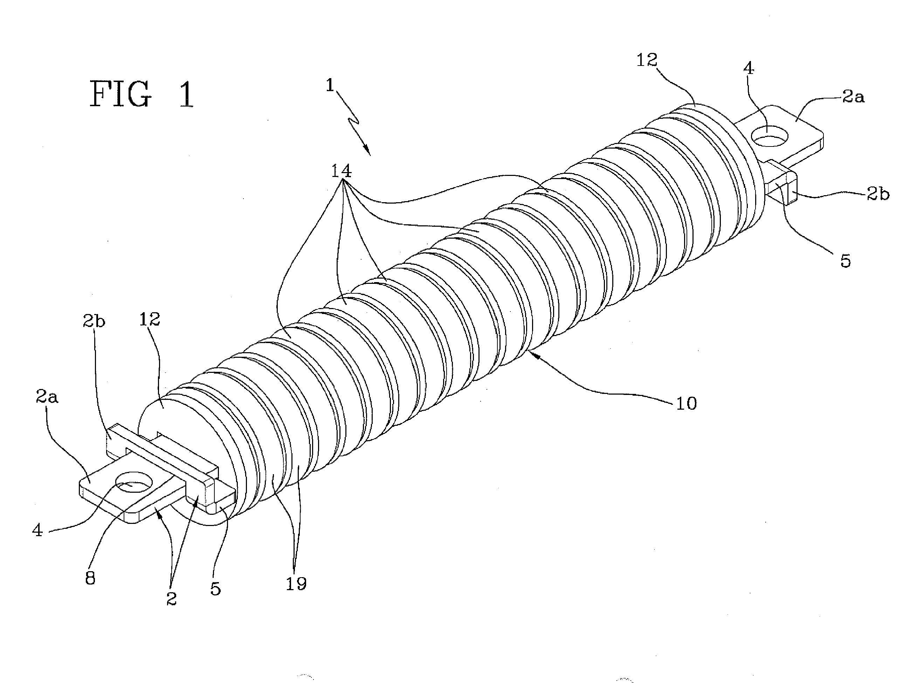

figure 1 is a perspective view of a shock absorber for a safety line apparatus of the present invention; and
figure 2 is a perspective exploded view of the shock absorber for safety line apparatus of figure 1;
figure 3 is a portion of a frontal view of the device of figure 1, in a second variant.

With reference to the figures of the drawings, 1 denotes in its entirety a shock absorber for safety line apparatus of the present invention.

The tension indicator 1 comprises two rods 2 which are slidably associated to one another. Each rod 2 has an elongate shape and exhibits a respective prevalent longitudinal development axis B. In particular, each rod 2 has at least in part a uniform transversal section. The transversal section is, in the described embodiment, rectangular.

Each rod 2 exhibits a first end 2a and a second end 2b opposite the first end 2a. Each rod 2 also exhibits a hole 4 at the first end 2a thereof for connecting a cable or an anchorage of the safety line apparatus.

Each rod 2 comprises a coupling portion 5 at the second end 2b thereof. The coupling portion 5 is preferably L-shaped or C-shaped.

Each rod 2 further comprises a central body 6 realised in a single piece with the coupling portion 5. In greater detail, the central body 6 develops along the prevalent longitudinal axis of development B of the rod 2 and has a transversal section which is substantially rectangular and uniform. The coupling portion 5 exhibits a greater width than that of the central body 6. The coupling portion 5 exhibits a slit 8 located at an edge of the coupling portion 5. In particular, the slit 8 has a rectangular section. In greater detail, the slit 8 of each rod 2 has a complementary shape to the section of the rod 2 at the first end 2a thereof.

The prevalent longitudinal axes of development B of the respective rods 2 are substantially parallel to one another. In this way, the respective rods 2 can each slide along its own prevalent longitudinal axis of development B, parallel to one another.

The first end 2a of each rod 2 is inserted in the slit 8 afforded on the other rod 2 in order to slidably couple the rods 2. In particular, this enables the rod 2 to be retained in the slit 8, thus enabling the rod 2 to slide, though preventing transversal displacements with respect to its own prevalent longitudinal axis of development B.

The rods 2 each exhibit a respective contact surface 3. In other words, the rods 2 are superposed and in reciprocal contact at the respective contact surfaces 3.

With reference to the reciprocal arrangement of the rods 2, the second ends 2b are arranged between the first ends 2a. In detail, the first ends 2a of the rods 2 move in a reciprocally distancing direction when the second ends 2b move in reciprocal nearing. Likewise, the first ends 2a of the rods 2 move in a reciprocally nearing direction when the second ends 2b move in a reciprocally distancing direction. In use, a tension originating from the cable of the safety line apparatus is applied between the first ends 2a.

A dissipating organ 10 is arranged between the second ends 2b of the rods 2 and is able to absorb a quantity of energy by plastically deforming. In particular, the dissipating organ 10 is plastically deformable such as to pass from a first configuration in which it exhibits a maximum length into a second configuration in which it exhibits a minimum length. In greater detail, the dissipating organ 10 is activatable by reciprocal nearing of the second ends 2b in order to brake the sliding of the rods 2.

The shock absorber 1 comprises two washers 12, each located between the dissipating organ 10 and a respective coupling portion 5. In particular, each washer 12 is in contact with an abutting surface 18 of a respective rod 2. The abutting surface 8 is defined on each coupling portion 5 at the connection with the central body 6, where the transversal section of the rod 2 exhibits a variation. In more detail, the washers 12 have the aim of increasing the rest surface available to the dissipating organ 10 and the abutment surfaces 18 of the rod 2, thus improving the transfer of force between them.

The dissipating organ 10 exhibits a through-cavity 15 in which the rods 2 are inserted such that the rods 2 can slide internally thereof. This advantageously enables minimising the size of the dissipating organ 10. The dissipating organ 10 comprises at least a saucer-shaped deformable element 14. In other words, the deformable element 14 is a disc-shaped element, substantially a saucer-shaped element, preferably spherical, such as to define a convex surface 19 and a concave surface 20.

The deformable element 14 thus exhibits a variable concavity 13. In particular, the concavity 13 is greatest when the dissipating organ 10 is in the first configuration. Further, the concavity 13 is at its minimum, preferably null, when the dissipating organ 10 is in the second configuration. In other words, the deformable element 14 is plastically compressible such as to pass from an undeformed configuration to a deformed configuration. In still other words, the deformable element 14 flattens when passing from the undeformed configuration to the deformed configuration.

In greater detail, when the deformable element 14 is in the undeformed configuration, the dissipating organ 10 is in the first configuration. Further, when the deformable element 14 is in the deformed configuration, the dissipating organ is in the second configuration.

In the described embodiment, the dissipating organ 10 comprises a plurality of deformable elements 14 arranged in series. In particular, the deformable elements 14 are arranged one by a side of another such that the concavity 13 of each deformable element 14 is orientated in an opposite direction to the direction of the concavity 13 of the adjacent deformable element 14.

In other words, the deformable elements 14 are associated in couples such that the concavities 13 of the deformable elements 14 of each couple face one another. In greater detail, the deformable elements 14 are in reciprocal contact at the respective peripheral edges 14b.

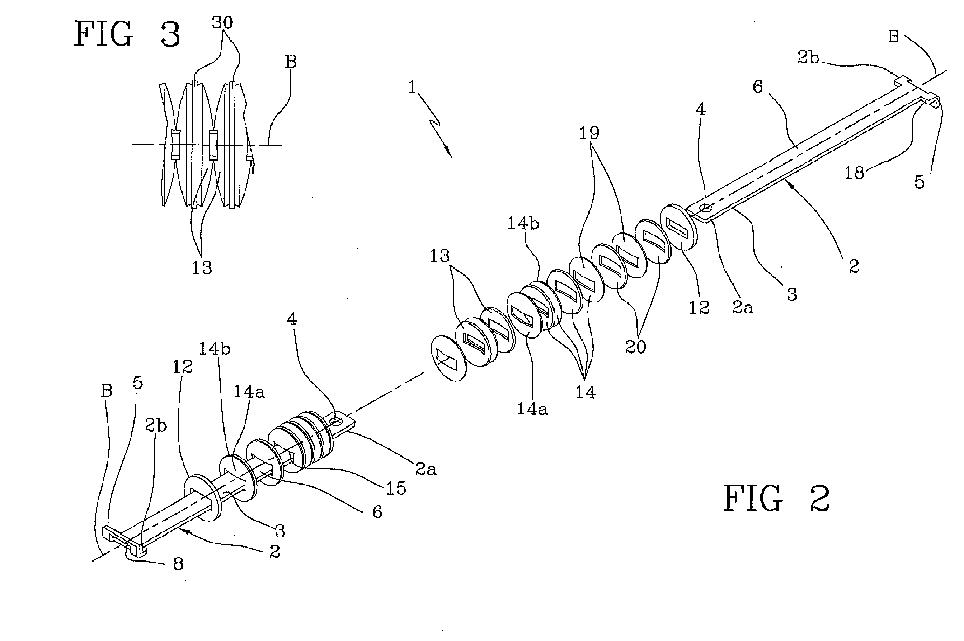

Further, the deformable elements 14 are also in reciprocal contact at respective central portions 14a thereof. In other words, the deformable elements 14 are packed between the coupling portions 5 of the rods 2. With reference to the embodiment of figure 3, each dissipating organ 10 comprises the deformable elements and further flat disc-shaped elements. As illustrated in figure 3, the deformable elements 14 are associated in couples with an interposing of a further flat disc-shaped element 30.

More specifically, the concavity 13 of each deformable element 14 is facing the flat disc-shaped element 30.

In this embodiment, the dissipating organ 10 comprises, in series, at least a deformable element 14, with the respective concavity 13, a flat disc-shaped element 30 and an adjacent deformable element 14, with the concavity 13 thereof orientated in an opposite direction to the concavity 13 belonging to the preceding deformable element 14.

In this configuration, the deformable elements 14 exhibit peripheral edges 14b thereof in contact with the respective flat disc-shaped elements 30 and the central portions 14a in contact with one another.

Without forsaking the ambit of protection of the present invention, the dissipating organ 10 can also comprise an alternation of the deformable element 14 and the flat disc-shaped element 30.

Note that it is possible to pile any number of deformable elements 14. This advantageously enables defining the total damping capacity of the dissipating organ 10, by varying the number of deformable elements 14. Each deformable element 14 exhibits a through-hole 4, in which the rods 2 are slidably inserted.

In greater detail, the hole 4 has a complementary section to the section of the central bodies 6 of the rods 2 when the central bodies 6 are superposed. In particular, the entirety of the holes 4 of the deformable elements 14 at least partly defines the cavity 15 of the dissipating organ 10. In other words, the cavity 15 is at least partly defined by a succession of holes 4 in the deformable elements 14.

Each deformable element 14 has a thickness comprised between 1 and 5 mm, preferably 3 mm. Each deformable element 14 further has a radius of curvature which is comprised between 80 and 95 mm, preferably 88 mm. Each deformable element 14 further exhibits a plan diagram comprised between 50 and 75 mm, preferably 66 mm. Each deformable element 14 is constituted by plastically-deformable material; by way of example each deformable element 14 is made of metal or another material.

As mentioned above, in use the first ends 2a of the rods 2 are connected to the anchoring points and to the cable of the safety line apparatus. The first ends 2a are thus subjected to tension in use.

The operator is safeguarded by means of a rope attached to the cable. If an operator falls, an increase in tension is determined on the first ends 2a of the rods 2 and, as has been demonstrated, this causes reciprocal nearing of the first ends 2a. The dissipating organ 10 is therefore subjected to a compression force which is equal to the tension applied on the first ends 2a of the rods 2.

When this compression exceeds a predetermined value, the deformable elements 14 pass from the initial configuration to the deformed configuration and in this way they progressively absorb the kinetic energy of the operator, braking his fall.

The present invention attains the set aim.

As the dissipating organ deforms by shortening, it functions by compression. The shock absorber is therefore able to slow down the operator's fall, significantly reducing the risk that the dissipating organ might mechanically yield, thus maintaining its structural integrity.

## Claims

1. A shock absorber for a safety line apparatus, **characterised in that** it comprises two rods (2) slidably associated to one another, the rods (2) each exhibiting a first end (2a) and a second end (2b), the first ends (2a) being connectable to a cable of a safety line apparatus, the rods (2) further exhibiting respective prevalent longitudinal development axes (B) which are substantially parallel to one another, the first ends (2a) moving in reciprocal distancing/nearing when the second ends (2b) move respectively in reciprocal nearing/distancing; a dissipation organ (10) arranged between the second ends (2b) of the rods (2) and activatable by nearing the second ends (2b) in order to brake a distancing sliding action of the first ends (2a) of the rods (2), the dissipation organ (10) being plastically deformable to pass from a first configuration in which the dissipation organ (20) exhibits a maximum length to a second configuration in which the dissipation organ (10) exhibits a minimum length.

2. The shock absorber of claim 1, **characterised in that** the dissipation organ (10) comprises a saucer-shaped deformable element (14) exhibiting a variable concavity (13), the concavity (13) being at a maximum thereof when the dissipation organ (10) is in the first configuration thereof and being at a minimum thereof when the dissipation organ (10) is in the second configuration.

3. The shock absorber of claim 2, **characterised in that** the dissipation organ (10) comprises a plurality of the deformable elements (14) arranged in series.

4. The shock absorber of claim 3, **characterised in that** the deformable elements (14) are arranged side-by-side such that the concavity (13) of each deformable element (14) is orientated in an opposite direction to a direction of the concavity (13) of an adjacent deformable element (14).

5. The shock absorber of claim 3 or 4, **characterised in that** the deformable elements (14) are associated in pairs such that the respective concavities (13) are facing one another.

6. The shock absorber of any one of claims from 2 to 5, **characterised in that** each deformable element (14) exhibits a through-hole (4), the rods (2) being slidably inserted in the through-hole (4).

7. The shock absorber of claim 6, **characterised in that** the dissipation organ (10) exhibits a through-cavity (15) at least in part defined by a succession of the through-holes (4) of the deformable elements (14).

8. The shock absorber of any one of the preceding claims, **characterised in that** each rod (2) comprises a coupling portion (5) at the second end (2b) thereof, the coupling portion (5) exhibiting a slit (8); the first end of each rod (2) being slidably inserted in the slit (8) afforded in the coupling portion (5) of the other rod (2) in order to couple the rods (2).

9. The shock absorber of claim 8, **characterised in that** each rod (2) comprises a central body (6) connected to the coupling portion (5); the coupling portion (5) exhibiting a greater width than a width of the central body (6).

10. The shock absorber of any one of the preceding claims, **characterised in that** the second ends (2b) of the rods (2) are arranged between the first ends (2a) of the rods (2).
